# FASCICULE DE BREVET EUROPEEN

(11) **EP 0 864 133 B1**
(45) Date de publication et mention de la délivrance du brevet: **24.10.2001**
(21) Numéro de dépôt: 96941095.0
(22) Date de dépôt: 02.12.1996
(51) Int. Cl.: G06K 7/06, G06K 7/015

(54) **CARTE AMOVIBLE ENFICHABLE, FORMANT LECTEUR DE CARTE A PUCE POUR MICRO-ORDINATEUR**
LÖSBARE STECKKARTE ALS CHIPKARTENLESER FÜR MIKRORECHNER
RELEASABLE PLUG-IN CARD FORMING A SMART CARD READER FOR A MICROCOMPUTER

(30) Priorité: 30.11.1995 FR 9514852
(43) Date de publication de la demande: 16.09.1998
(73) Titulaire: GEMPLUS, 13881 Gémenos Cédex (FR)
(72) Inventeur: LISIMAQUE, Gilles, Potomac, MD 20854 (US); MONNOT, Jérôme, F-13420 Gémenos (FR)
(86) Numéro de dépôt international: FR9601913
(87) Numéro de publication internationale: WO9720283

(56) Documents cités:
- DE-A- 4 310 517
- FR-A- 2 686 172
- US-A- 3 777 120

## Description

L'invention se rapporte à des cartes amovibles enfichables destinées à être insérées temporairement dans un micro-ordinateur (ou ordinateur personnel, ou PC de l'anglais "personal computer"), ou dans des dispositifs de traitement d'informations en général.

Ces cartes sont généralement connues sous l'appellation cartes PCMCIA et sont réalisées selon la norme PCMCIA définie par l'association du même nom ("Personal Computer Memory Card International Association" 1030 B East Duane Avenue Sunnyvale, California). Elles comportent plusieurs puces à circuits intégrés et un connecteur femelle de 68 broches enfichable dans un connecteur mâle correspondant du micro-ordinateur. Ces cartes sont principalement des cartes à mémoire de masse qui pourraient à l'avenir remplacer les disquettes et autres moyens de stockage de masse de type magnétique. Elles ont des capacités de stockage équivalentes et sont beaucoup plus rapides d'accès que les mémoires magnétiques. Elles peuvent servir aussi d'extension de mémoire vive du micro-ordinateur.

Il a déjà été proposé, dans la demande de brevet FR n° 92 00323 déposée par la demanderesse et publiée sous le n° 2 686 171, de modifier des cartes PCMCIA pour les transformer en lecteurs de cartes à puces à contacts affleurants telles que les cartes de crédit ou les cartes d'accès de format maintenant très courant dans le grand public. Ainsi, un micro-ordinateur équipé d'une fente de réception de carte PCMCIA peut recevoir une carte à puce à contacts affleurants même s'il n'est pas équipé d'une fente de lecture de telles cartes à puce. La carte à puce est couplée à la carte PCMCIA et reliée électriquement à celle-ci; les deux cartes sont introduites dans le micro-ordinateur et les échanges entre la carte à puce et le micro-ordinateur ne se font que par l'intermédiaire du connecteur enfichable de la carte PCMCIA et du connecteur correspondant du micro-ordinateur.

Ceci permet par exemple :
- de faire communiquer l'ordinateur ou tout autre système de traitement d'information avec une carte à puce à contacts affleurants même s'il n'est pas équipé de lecteur de cartes à contacts affleurants,
- de protéger l'accès à l'ordinateur par une carte à puce de sécurité,
- de protéger l'accès à la carte PCMCIA par une carte à puce de sécurité,
- de permettre l'accès à un réseau protégé par authentification utilisant une carte à puce.

Il a également été proposé, dans la demande de brevet FR n° 95 06723 déposée par la demanderesse, un système amélioré de la carte PCMCIA formant lecteur de cartes à puces qui vient d'être décrit. Pour cela, la carte à mémoire comporte deux plaques sensiblement de même longueur et solidaires l'une de l'autre dans la partie située du côté du connecteur enfichable, formant une fente d'insertion de carte à puce du côté opposé.
La deuxième plaque permet d'assurer un maintien ferme des contacts affleurants de la carte à puce contre un connecteur à contacts placé sur la première plaque de son lecteur. La largeur de la carte amovible est sensiblement la même que celle de la carte à puce. La fente délimitée par les deux plaques n'est pas délimitée latéralement puisque ses bords latéraux sont ouverts de manière à ce que la carte amovible reste conforme aux dimensions hors-tout d'une carte répondant à la norme PCMCIA.

Dans ces deux demandes de brevet, le-principe de base, pour le positionnement latéral de la carte à puce, réside dans l'utilisation des bords latéraux de la fente du micro-ordinateur, qui permettent de guider aussi bien la carte amovible formant le lecteur que la carte à puce. En effet, dans la mesure où les dimensions théoriques de la carte PCMCIA sont identiques à celles de la carte à puce, il est possible de s'appuyer sur la largeur du logement pratiqué dans le micro-ordinateur, pour guider la carte à puce et lui assurer un bon positionnement sur la carte amovible.

Cependant, la demanderesse s'est rendu compte que le fait d'utiliser les bords latéraux de la fente du micro-ordinateur pour guider la carte à puce, afin de lui assurer un bon positionnement, engendre un autre problème tout à fait inattendu. En effet, il s'avère aujourd'hui que de nombreux micro-ordinateurs ou autres systèmes de traitement d'informations, ne respectent pas les dimensions imposées par la norme PCMCIA et les tolérances réelles sur la largeur de la fente sont très variables d'un produit à l'autre, ou d'une catégorie de produits (ordinateur personnel, décodeur de télévision numérique, etc...) à l'autre. L'utilisation des bords latéraux de la fente du micro-ordinateur pour positionner la carte à puce de manière précise sur la carte amovible formant lecteur de carte à puce n'est donc plus possible. La carte à puce n'étant pas suffisamment guidée, un décalage même léger de celle-ci par rapport à la carte PCMCIA est suffisant pour entraîner un dysfonctionnement ou un arrêt lors de l'opération de lecture.

Une première solution envisageable pour positionner la carte à puce de manière précise sur son lecteur consiste à réaliser des renforts latéraux le long de la carte amovible enfichable, de manière a fabriquer des coulisses sur lesquelles vient glisser la carte à puce.

Cette solution ne convient pourtant pas. En effet, la largeur d'une carte PCMCIA étant similaire à celle d'une carte à puce, réalisée au format classique des cartes à puces selon la norme ISO 7816-1 et ISO 7816-2, et les renforts latéraux possédant une épaisseur suffisante pour réduire de façon significative la largeur de la carte amovible enfichable, il devient impossible de. faire coulisser la carte à puce sans modifier la largeur de la carte amovible. Or, en modifiant la largeur de la carte amovible enfichable, les dimensions de celle-ci ne répondent plus aux exigences de la norme PCMCIA.

On connaît également, de l'état de la technique, un document DE-A-4 310 517 qui décrit une carte amovible comportant un connecteur externe apte à être enfiché dans un ordinateur et un connecteur à contacts affleurants destiné à être relié électriquement à une carte à puce. Cette carte amovible comporte en outre un système mécanique apte à guider la mise en place de la carte à puce sur ladite carte amovible enfichable.

Par conséquent, le problème qui s'est posé a consisté à chercher un moyen permettant de guider la carte à puce et de la positionner de façon précise sur la carte PCMCIA, sans modifier les dimensions de cette dernière.

La présente invention permet de résoudre ce problème. Elle a pour objet une carte amovible enfichable selon la revendication 1, c'est-à-dire comportant un système mécanique de guidage dont la forme se combine avec celle de la carte à puce afin d'assurer à cette dernière un bon positionnement par rapport au connecteur interne.

D'autres caractéristiques et avantages de la présente invention apparaîtront à la lecture de la description faite à titre d'exemple illustratif et non limitatif, en référence aux figures annexées qui représentent :
- la figure 1, une vue générale en perspective d'une carte PCMCIA selon l'invention,
- la figure 2, une vue de dessus d'un mode de réalisation d'une carte PCMCIA selon l'invention, avec une carte à puce en cours d'insertion,
- la figure 3, une vue de dessus d'un autre mode de réalisation d'une carte PCMCIA selon l'invention, avec une carte à puce insérée,
- la figure 4, une vue de dessus d'un autre mode de réalisation d'une carte PCMCIA selon l'invention, avec une carte à puce insérée.

La carte amovible à connecteur enfichable selon l'invention est désignée par la référence générale 10. Elle peut être insérée dans une fente 12, d'un micro-ordinateur 14. En principe, la carte 10 comporte un connecteur externe femelle 11 de 68 broches qui peut pénétrer au fond de la fente 12, l'actuelle est équipée d'un connecteur mâle correspondant de 68 broches. Ce connecteur mâle constitue un port d'entrée-sortie parallèle pour le micro-ordinateur et la communication entre la carte 10 et le micro-ordinateur est une communication de type parallèle.

Dans l'exemple de réalisation représenté, la carte 10 comporte une ou plusieurs puces de circuit intégré, noyées dans la matière plastique constituant le corps de la carte, ainsi que des connexions entre ces puces, et des connexions des puces aux différentes broches du connecteur externe enfichable. Les puces peuvent être des puces de mémoires ROM ou EPROM ou EEPROM, par exemple, dans le cas où la carte constitue une mémoire de masse pour le micro-ordinateur. Mais la carte peut avoir d'autres fonctions et comprendre par exemple un microprocesseur, etc. Typiquement, les dimensions de la carte 10, selon la norme PCMCIA, sont d'environ 5,4 centimètres par 8,5 centimètres et d'une épaisseur d'environ 3 à 5 millimètres.

Dans d'autres exemples de réalisation non représentés, la carte PCMCIA 10 peut avoir la forme générale d'un boîtier parallélépipédique, pourvu d'une fente d'introduction d'une carte à puce, et de côtés latéraux ouverts laissant apparaître les chants latéraux d'une carte à puce introduite.

Dans ce cas, les contacts affleurants du connecteur de la carte PCMCIA sont disposés à l'intérieur du boîtier, de manière à pouvoir coopérer avec les contacts affleurants d'une carte à puce introduite. Dans un tel mode de réalisation, la présente invention trouve néanmoins une application, puisque les chants latéraux de la carte à puce ne sont pas bien guidés par le boîtier de la carte PCMCIA. La suite de la description se rapporte au type de carte PCMCIA représenté, étant néanmoins entendu que l'invention s'applique à d'autres types de cartes, notamment sous forme de boîtier, dépourvues de guidage suffisant de la carte à puce introduite.

Dans la réalisation représentée, la carte 10 comporte en outre, par exemple sur sa face principale 24, un connecteur 16 à contacts affleurants et légèrement en saillie par rapport au plan de la carte. Ce connecteur 16 est conçu et placé de telle manière qu'il puisse venir en contact avec les différents contacts affleurants 26 d'une carte à puce 22, de type carte de crédit par exemple, lorsqu'une telle carte est mise en place sur la carte PCMCIA 10.

De préférence, l'extrémité 19 de la carte à mémoire 10, située du côté du connecteur externe 11, c'est-à-dire du même côté que celui qui est-inséré dans la fente 12, est plus épaisse que le reste de la carte. Une carte de crédit 22 peut ainsi venir en butée contre un bord 20 séparant la partie plus épaisse 19 de la partie moins épaisse 18; ce bord 20 est parallèle aux petits bords de la carte 10.

Le connecteur 16, à contacts affleurants, de la carte amovible 10 est relié soit directement aux puces de cette carte, soit au connecteur externe 11 enfichable de cette carte, soit à la fois aux puces et au connecteur externe, selon les applications.

La carte à puce 22 peut avoir une fonction de sécurité d'accès, soit pour contrôler et autoriser l'utilisation du micro-ordinateur, soit pour contrôler l'accès aux mémoires de la carte enfichable 10, notamment dans le cas ou celle-ci sert de mémoire de masse ou de modem et contient (ou permet l'accès à) des informations confidentielles ou des programmes pour le micro-ordinateur.

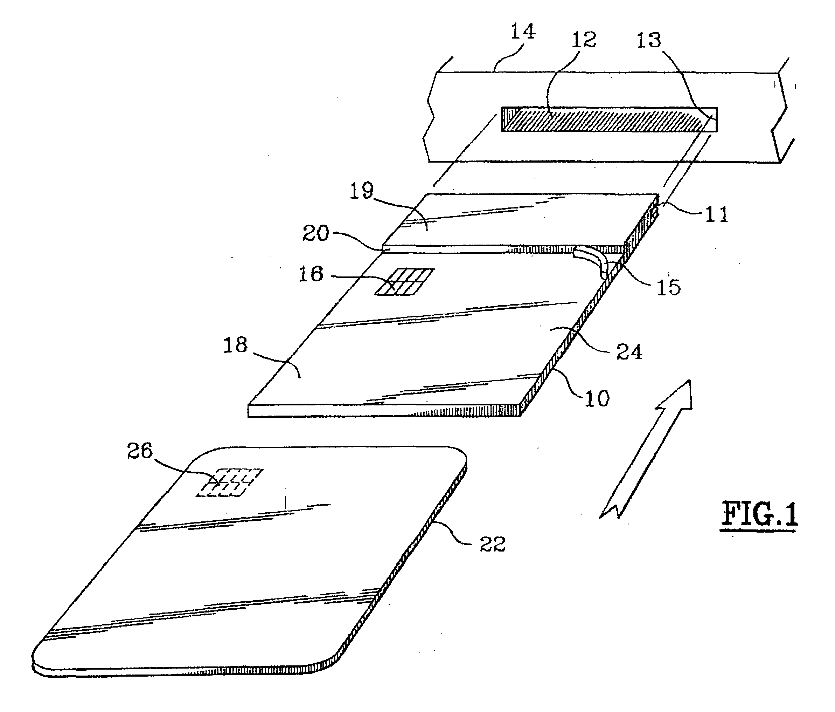

La carte amovible 10 et la carte à puce 22 sont représentées hors de la fente 12 de l'ordinateur 14. Elles sont insérées l'une après l'autre, dans la fente dans le sens de la flèche telle que représentée sur la figure 1. La largeur d'une carte PCMCIA est similaire à celle d'une carte à puce réalisée au format classique des cartes à puce. Généralement, le positionnement latéral de la carte à puce 22 sur ou dans la carte PCMCIA 10 est réalisé en utilisant les bords latéraux 13 de la fente 12 du micro-ordinateur 14. En effet, la fente 12 est pratiquée sur une largeur suffisamment étroite pour permettre à ses bords latéraux 13 de servir de guides aussi bien lors de l'insertion de la carte enfichable 10 que lors de l'insertion de la carte à puce 22. Ainsi, les guides constitués par les bords latéraux 13 de la fente 12 permettent d'assurer un bon positionnement de la carte à puce 22 sur la carte 10, de manière à ce que ses contacts affleurants 26 établissent une liaison électrique avec les contacts du connecteur 16 de la carte amovible 10.

Cependant, il s'avère que de nombreux micro-ordinateur ou autres systèmes de traitement d'information ne respectent pas les dimensions imposées par la norme PCMCIA et la largeur de la fente 12 est souvent supérieure à la largeur classiquement attendue, et varie d'un micro-ordinateur à un autre. Par conséquent, les bords latéraux 13 de la fente 12 ne peuvent plus être utilisée comme des guides.

Selon l'invention, la carte enfichable 10 formant lecteur de carte à puce, comporte en outre, un système de guidage 15, dont la forme se combine à celle d'une carte à puce 22 à contacts affleurants. Ce système de guidage permet d'assurer un bon positionnement latéral de la carte à puce 22 c'est-à-dire perpendiculaire au sens d'introduction de la carte à puce, par rapport au connecteur interne 16 de la carte PCMCIA 10. De plus, il permet d'éviter de réaliser une modification des dimensions de la carte amovible 10, qui sont imposées par la norme PCMCIA. Pour cela, le système de guidage 15 comprend au moins un butoir placé, du côté du connecteur externe 11 de la carte 10, de façon à pouvoir coopérer avec au moins un angle de la carte à puce lors de son positionnement sur ou dans la carte amovible 10. Chaque butoir est placé par exemple dans un des angles de la carte situés entre la partie plus épaisse 19, le bord 20 et la partie moins épaisse 18. Dans le mode de réalisation représenté, le butoir 15 est fixé sur la face principale 24 de la carte 10 par collage ou moulage ou comme élément rapporté par exemple. De plus, il est réalisé dans le même matériau que la carte 10, c'est-à-dire en plastique. Cependant, selon une variante de réalisation, il peut également être réalisé dans une matière métallique.

Ainsi le système de guidage 15 étant réalisé dans un angle de la carte 10 et du même côté que celui qui est inséré dans le fond de la fente 12, il permet de guider la carte à puce 22 lors de la phase finale de son insertion, afin de lui assurer un positionnement très précis par rapport au connecteur 16 de la carte amovible 10.

L'épaisseur du guide 15 est de préférence égale à celle du bord 20 séparant la partie la plus épaisse 19 de la partie la moins épaisse 18 de la carte amovible 10, et dans tous les cas cette épaisseur ne dépasse pas la hauteur de fente, du micro-ordinateur, dans laquelle sont insérées les deux cartes.

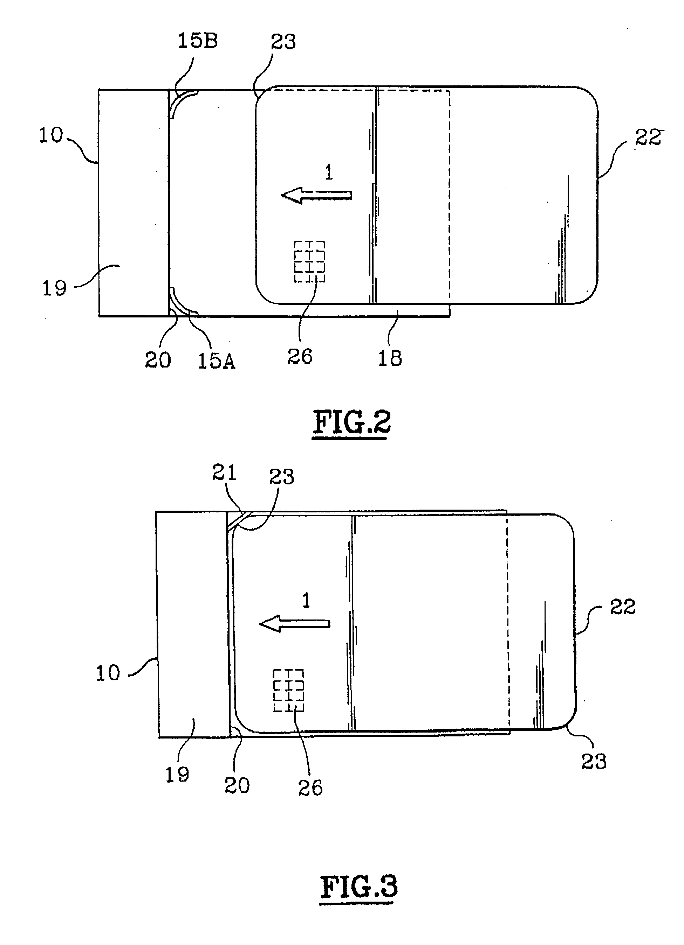

La figure 2 représente une vue de dessus de la carte amovible de la figure 1, et une carte à puce 22 au cours de sa mise en place sur cette carte amovible 10. Chacun des angles de la carte à puce 22, de type carte de crédit par exemple, possède, en conformité avec les normes ISO 7816-1 et ISO 7816-2, un léger arrondi 23, qui est représenté de manière exagérée sur la figure 2 pour faciliter sa compréhension. De manière avantageuse, le guidage de la carte à puce 22 dans la phase finale de son insertion est réalisé en s'appuyant sur cet arrondi 23.

De préférence, le système de guidage 15 représenté sur la figure 2 possède deux butoirs 15A et 15B, situés de chaque côté du connecteur enfichable et contre le bord 20 séparant la partie plus épaisse 19 de la partie moins épaisse 18 de la carte amovible 10.

L'épaisseur additionnée de la carte amovible 10 et de la carte à puce 22 est sensiblement égale à celle de la partie plus épaisse 19 de la carte, mais cette épaisseur cumulée ne dépasse pas la hauteur de la fente, du micro-ordinateur, dans laquelle sont insérées les deux cartes.

De manière avantageuse, les butoirs 15A et 15B se présentent sous une forme arrondie. Sur la figure 2, le sens de la mise en place de la carte 22 est représenté par une flèche désignée par la référence 1. La carte 22 est représenté au cours de la phase finale de sa mise en place et de telle sorte qu'elle soit légèrement décalée par rapport aux bords longitudinaux de la carte à mémoire 10. Dans ce cas, lors de la phase finale de son insertion, un des angles 23 de la carte 22 vient heurter l'un des butoirs du système de guidage 15, par exemple le butoir 15B sur la figure 2. L'angle arrondi 23 de la carte 22 est alors guidé et suit la courbure du guide 15B jusqu'à ce que l'extrémité de la carte 22 vienne en appui contre le bord 20 de la carte amovible 10, c'est-à-dire jusqu'à ce que la carte à puce se positionne de manière précise entre les deux guides 15A et 15B. Ainsi, les contacts affleurants 26 de la carte à puce 22, représentés en pointillés sur la figure 2, sont placés en vis-à-vis des contacts du connecteur 16, non visible sur la figure 2, de la carte amovible 10.

De préférence, le rayon de courbure des butoirs 15A et 15B est identique ou proche de celui des angles 23 de la carte à puce 22, de manière à ce qu'ils épousent parfaitement la forme des incurvations de la carte à puce.

La figure 3 représente également une carte à puce 22 mise en place sur une carte amovible enfichable 10 selon un autre mode de réalisation de l'invention. Les angles 23 de la carte à puce 22 sont représentés de manière exagérée sur la figure 3. Le système de guidage 21 de la carte amovible 10 comprend un seul butoir, mais comme il a été décrit précédemment il peut en comporter un deuxième. Le butoir 21 est également fixé, par collage par exemple, du côté du connecteur externe enfichable, dans un angle situé entre la partie épaisse 19, le bord 20 et la partie moins épaisse 18 de la carte amovible 10. De manière avantageuse, ce butoir 21 est rectiligne et se présente sous la forme d'une rampe de guidage. Cette rampe forme un angle obtus avec le bord 20 de la carte 10. De la même manière que précédemment décrite, la carte 22 est insérée dans le sens représenté par la flèche désignée par la référence 1. Lorsqu'un angle arrondi 23 de la carte 22 heurte le butoir 21, alors la carte 22, en appui sur ce butoir, est guidée le long de la rampe jusqu'à ce que son extrémité vienne se placer contre le bord 20 de la carte PCMCIA 10. Ainsi, ce système de guidage 21 permet, lui aussi, d'assurer un positionnement très précis de la carte à puce 22 sur la carte PCMCIA 10.

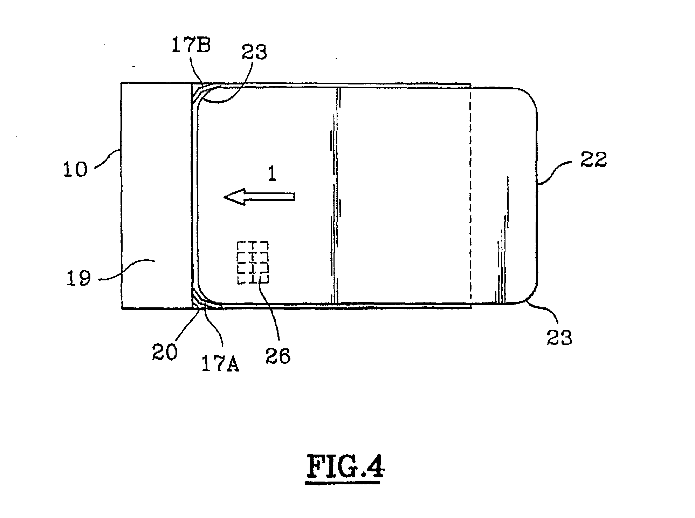

La figure 4 représente un autre mode de réalisation d'une carte amovible 10 selon l'invention et une carte à puce 22 correctement positionnée sur celle-ci. Pour faciliter la compréhension, les angles 23 de la carte à puce 22 et le système de guidage 17 sont représentés de manière exagérée sur la figure 3. Comme précédemment décrit, la système de guidage 17, sur cette carte amovible 10, comprend un ou deux butoirs. Sur la figure 4, le système de guidage représenté possède deux butoirs 17A et 17B, situés du côté du connecteur externe enfichable et contre le bord 20. De manière avantageuse, ces deux butoirs 17A et 17B comportent chacun deux rampes de guidage, formées par deux branches rectilignes, et se présentent sous une forme angulaire. De manière avantageuse, l'angle formé entre ces deux rampes de guidage est obtus. De la même manière que précédemment décrite, la carte 22 est insérée dans le sens représenté par la flèche 1. Lorsqu'un angle arrondi 23 de la carte 22 heurte l'un des butoirs, par exemple le butoir 17B, alors la carte suit successivement les deux rampes de ce butoir de manière à être guidée vers l'intérieur de l'espace définit par les bords latéraux de la carte PCMCIA 10 et par les guides 17A et 17B. L'insertion de la carte 22 est terminée lorsque son extrémité vient se placer en appui contre le bord 20 de la carte PCMCIA. Dans ce cas, la carte 22 est positionnée de manière très précise et ses contacts affleurants 26, représentés en pointillés sur la figure 3, sont électriquement reliés aux contacts affleurants du connecteur 16, non visible sur la figure 3, de la carte amovible 10.

De manière avantageuse, la valeur de l'angle formé entre les rampes de chaque butoir 17A et 17B, ou entre la rampe du butoir 21 et le bord 20 de la carte 10, est comprise entre 100° et 150°. De préférence, elle est comprise entre 115° et 135°.

## Revendications

1. Carte amovible enfichable (10) pour micro-ordinateur, comportant un premier connecteur de type externe (11) enfichable et, un second connecteur (16) à contacts affleurants apte à créer une liaison électrique avec des contacts affleurants (26) d'une carte à puce (22) pour former un lecteur de carte à puce, **caractérisée en ce qu'**elle comporte un système mécanique de guidage (15, 17, 21) apte à coopérer avec au moins un des deux angles de la carte à puce situés vers ledit connecteur externe (11) pour assurer un guidage latéral de l'extrémité de la carte à puce, perpendiculairement à son sens d'introduction, lorsque ladite carte à puce (22) est en phase finale de mise en place sur la carte amovible enfichable (10).

2. Carte amovible enfichable selon la revendication 1, **caractérisée en ce que** le système mécanique de guidage (15, 17, 21) est apte à coopérer par emboîtement avec la dite extrémité de la carte à puce (22), lorsque ladite carte à puce (22) est complètement mise en place sur la carte amovible enfichable (10).

3. Carte amovible enfichable selon la revendication 2, **caractérisée en ce que** ledit système de guidage comporte deux butoirs (15, 15A, 15B, 17A, 17B, 21) placés du côté du connecteur externe (11), respectivement de chaque côté de la carte amovible (10).

4. Carte amovible enfichable selon la revendication 3, **caractérisée en ce que** le système de guidage (15, 17, 21) comprend en outre un bord (20) séparant une partie (19), située du côté du connecteur externe (11), d'une partie moins épaisse (18) définie par le reste de la carte amovible (10) et les deux butoirs (15, 15A, 15B, 17A, 17B, 21) placés du côté du connecteur externe (11) respectivement dans un des angles de la carte amovible (10) situés entre la partie épaisse (19), le bord (20) et la partie moins épaisse (18).

5. Carte amovible enfichable selon l'une des revendications 3 ou 4, **caractérisée en ce que** chaque butoir (15, 15A, 15B) est de forme arrondie.

6. Carte amovible enfichable selon la revendication 5 **caractérisée en ce que** le rayon de courbure de chaque butoir (15, 15A, 15B) est identique ou proche de celui des angles (23) de la carte à puce 22.

7. Carte amovible enfichable selon l'une des revendications 3 or 4, **caractérisée en ce que** chaque butoir (21) comporte une rampe de guidage rectiligne formant un angle obtus avec le bord (20) de la carte amovible (10) ouvert vers la partie centrale de la dite carte amovible (10).

8. Carte amovible enfichable selon l'une des revendications 3 or 4, **caractérisée en ce que** chaque butoir (17 A, 17B) est de forme angulaire et comporte deux rampes de guidage rectilignes formant entre elles un angle obtus ouvert vers la partie centrale de la dite carte amovible (10).

9. Carte amovible enfichable selon l'une des revendications 7 ou 8, **caractérisée en ce que** l'angle obtus présente une valeur comprise entre 100 et 150°.

## Patentansprüche

1. Herausziehbare Steckkarte (10) für Mikrocomputer mit einem ersten Stecker von externem Typ (11) und einem zweiten Stecker (16) mit bündigen Kontakten, die mit bündigen Kontakten (26) einer Chipkarte (22) eine elektrische Verbindung herstellen können, um ein Chipkarten-Lesegerät zu bilden, **dadurch gekennzeichnet, dass** sie ein mechanisches Führungssystem (15, 17, 21) umfasst, das mit mindestens einer der beiden zum besagten externen Stecker (11) hin gerichteten Ecken der Chipkarte zusammenwirken kann, um eine seitliche Führung des Endes der Chipkarte, lotrecht zu ihrer Einführungsrichtung zu gewährleisten, wenn sich die besagte Chipkarte (22) in der Endphase des Einsetzens auf der herausziehbaren Steckkarte (10) befindet.

2. Herausziehbare Steckkarte nach Anspruch 1, **dadurch gekennzeichnet, dass** das mechanische Führungssystem (15, 17, 21) durch Verschachtelung mit dem besagten Ende der Chipkarte (22) zusammenwirken kann, wenn die besagte Chipkarte (22) komplett auf der herausziehbaren Steckkarte (10) eingesetzt ist.

3. Herausziehbare Steckkarte nach Anspruch 2, **dadurch gekennzeichnet, dass** das besagte Führungssystem zwei Anschläge (15, 15A, 15B, 17A, 17B, 21) umfasst, die jeweils auf einer Seite der herausziehbaren Steckkarte (10) auf der Seite des externen Steckers (11) angeordnet sind.

4. Herausziehbare Steckkarte nach Anspruch 3, **dadurch gekennzeichnet, dass** das Führungssystem (15, 17, 21) im übrigen einen Rand (20) umfasst, der einen auf der Seite des externen Steckers (11) gelegenen Teil (19) von einem weniger dicken, vom Rest der herausziehbaren Steckkarte (10) definierten Teil (18) trennt, sowie die beiden Anschläge (15, 15A, 15B, 17A, 17B, 21), die auf der Seite des externen Steckers (11) jeweils in einer der sich zwischen dem dicken Teil (19), der Rand (20) und dem weniger dicken Teil (18) befindlichen Ecken der herausziehbaren Steckkarte (10) angeordnet sind.

5. Herausziehbare Steckkarte nach einem der Ansprüche 3 oder 4, **dadurch gekennzeichnet, dass** jeder Anschlag (15, 15A, 15B) eine abgerundete Form aufweist.

6. Herausziehbare Steckkarte nach Anspruch 5, **dadurch gekennzeichnet, dass** der Krümmungsradius eines jeden Anschlags (15, 15A, 15B) identisch mit oder ähnlich demjenigen der Ecken (23) der Chipkarte (22) ist.

7. Herausziehbare Steckkarte nach einem der Ansprüche 3 oder 4, **dadurch gekennzeichnet, dass** jeder Anschlag (21) eine geradlinige Führungsrampe aufweist, die mit dem Rand (20) der herausziehbaren Steckkarte (10) einen stumpfen Winkel bildet, der zum mittleren Teil der besagten herausziehbaren Steckkarte (10) hin geöffnet ist.

8. Herausziehbare Steckkarte nach einem der Ansprüche 3 oder 4, **dadurch gekennzeichnet, dass** jeder Anschlag (17A, 17B) winkelförmig ist und zwei geradlinige Führungsrampen aufweist, die untereinander einen stumpfen Winkel bilden, der zum mittleren Teil der besagten herausziehbaren Steckkarte (10) hin geöffnet ist.

9. Herausziehbare Steckkarte nach einem der Ansprüche 7 oder 8, **dadurch gekennzeichnet, dass** der stumpfe Winkel einen Wert zwischen 100 und 150° aufweist.

## Claims

1. A removable plug-in card (10) for a microcomputer, having a first connector (11) of the external plug-in type and a second connector (16) with flush contacts able to create an electrical connection with flush contacts (26) on a smart card (22) in order to form a smart-card reader, **characterised in that** it has a mechanical guidance system (15, 17, 21) able to cooperate with at least one of the two corners of the smart card situated close to the said external connector (11) in order to provide lateral guidance of the end of the smart card, perpendicularly to its direction of insertion, when the said smart card (22) is in the final phase of positioning on the removable plug-in card (10).

2. A removable plug-in card according to Claim 1, **characterised in that** the mechanical guidance system (15, 17, 21) is able to cooperate by nesting with the said end of the smart card (22), when the said smart card (22) is completely fitted on the removable plug-in card (10).

3. A removable plug-in card according to Claim 2, **characterised in that** the said guidance system includes two stops (15, 15A, 15B, 17A, 17B, 21) placed on the same side as the external connector (11), respectively on each side of the removable card (10).

4. A removable plug-in card according to Claim 3, **characterised in that** the guidance system (15, 17, 21) comprises in addition an edge (20) separating a part (19), situated on the same side as the external connector (11), from a thinner part (18) defined by the rest of the removable card (10) and the two stops (15, 15A, 15B, 17A, 17B, 21) placed on the same side as the external connector (11) respectively in one of the corners of the removable card (10) situated between the thick part (19), the edge (20) and the thinner part (18) .

5. A removable plug-in card according to one of Claims 3 or 4, **characterised in that** each stop (15, 15A, 15B) has a rounded shape.

6. A removable plug-in card according to Claim 5, **characterised in that** the radius of curvature of each stop (15, 15A, 15B) is identical or close to that of the corners (23) of the smart card 22.

7. A removable plug-in card according to one of Claims 3 or 4, **characterised in that** each stop (21) has a straight guidance ramp forming an obtuse angle with the edge (20) of the removable card (10) open towards the central part of the said removable card (10).

8. A removable plug-in card according to one of Claims 3 or 4, **characterised in that** each stop (17A, 17B) is angular in shape and has two straight guidance ramps forming between them an obtuse angle open towards the central part of the said removable card (10).

9. A removable plug-in card according to one of Claims 7 or 8, **characterised in that** the obtuse angle has a value of between 100° and 150°.
